Europäisches Patentamt

(19) European Patent Office     (11) Publication number: **0 036 736**
Office européen des brevets                                        **A2**

(12) **EUROPEAN PATENT APPLICATION**

(21) Application number: **81301093.1**     (51) Int. Cl.³: **B 23 K 9/16,** B 23 K 9/32

(22) Date of filing: **16.03.81**

(30) Priority: **17.03.80 US 130706**
**24.11.80 US 209530**
**24.11.80 US 209536**

(71) Applicant: **VALMONT INDUSTRIES INC.,** Valley
**Nebraska 68064 (US)**

(72) Inventor: **Stauffer, Howard V., 3518 Aspenwood, Sioux**
**City Iowa 51104 (US)**
Inventor: **Eaton, William C., 3364 S.114th Street, Omaha**
**Nebraska 68144 (US)**

(43) Date of publication of application: **30.09.81**
**Bulletin 81/39**

(84) Designated Contracting States: **AT BE CH DE FR IT LI**
**LU NL SE**

(74) Representative: **Barrett, James William et al, A.A.**
**THORNTON & CO. Northumberland House 303-306 High**
**Holborn, London WC1V 7LE (GB)**

(54) Control apparatus for reducing the waste of welding gas.

(57) A control apparatus is described for reducing the amount
of gas consumed during welding operations. A source of rela-
tively high pressure inert gas is supplied to an individual weld-
ing station. At the station is a pressure regulator for substan-
tially reducing the gas pressure and having an inlet in commu-
nication with the higher pressure gas supply and an outlet in
communication with the inlet of a surge tank. The outlet of the
surge tank is in communication with the welding apparatus. A
flow restriction is located between the regulator and surge
tank to increase the pressure drop across the surge tank dur-
ing the transient period. The volume of the surge tank is suffi-
cient, and the apparatus functions, to supply a flow of gas, to
the welding apparatus at the reduced pressure during tran-
sient when the welding apparatus is turned on, greater than
that supplied during steady state conditions.

In one embodiment, the apparatus of the invention in-
cludes a pressure gauge, pressure regulator, and surge tank
within a sealed housing with the face of the pressure gauge
positioned at one side thereof and visible externally of the
housing. Access to the regulator for adjustment thereof is li-
mited by means of a locked cover which, when opened, allows
adjustment of the regulator through an opening with a suitable
tool.

- 1 -

## CONTROL APPARATUS FOR REDUCING THE WASTE OF WELDING GAS

The present invention relates to control apparatus primarily for welding, and more particularly for reducing the amount of inert gas consumed during welding operations.

The welding system (for example, a metal inert gas or a tungsten inert gas type) may comprise a single welding station with its own supply of welding gas, or a plurality of welding stations all receiving gas from the same remote source of higher pressure gas as used in relatively large welding shops. In the remote system, a main gas line or header extends from the gas source to the various welding stations where drop lines extend therefrom to the actual welding apparatus. The present invention is applicable to both types of welding systems.

In both systems, the gas is stored at relatively high pressure, and typically there has been included a pressure regulator in the output line from the storage so that gas at a regulated pressure can be supplied to the one or more stations.

Heretofore, it has been customary, and even necessary, that the pressure of the welding gas downstream of the regulator be relatively high so that sufficient gas is available at all welding stations. For example, such pressure might be approximately 45 psi

$(3.163 \text{ kg/cm}^2)$. This high pressure presents a problem. With such high static pressure, when the actuator or trigger of the gas nozzle is initially depressed, a large flow of gas is exhausted from the nozzle due to the build up of the high static pressure within the line. The amount of gas exhausted is far greater than the amount needed under transient welding conditions.

Nor is the problem solved by simply adjusting the pressure regulator so as to lower the pressure, or, in the case of a remote system, by simply installing a second pressure regulator in each drop line to reduce the pressure in that line. There is a limitation on how much the pressure may be reduced and still supply a sufficient flow of gas to the welding apparatus to perform the necessary welding operations both under transient and steady state conditions. Thus, if the pressure is reduced by adjusting the pressure regulator so that exactly the optimum flow of gas is supplied during steady state welding conditions, there will be an insufficient flow under the transient conditions. Moreover, if the gas pressure is reduced by the pressure regulator to supply the optimum flow of gas under transient conditions, there will be an excess, or waste, of gas during steady state conditions.

Therefore, it is a principle object of this invention to provide an improved apparatus for substantially reducing the waste of welding gas, and which provides a means by which the gas supplied to each welding apparatus (gas nozzle) may be separately controlled to provide nearly optimum flows of gas at the nozzle to meet both transient and steady state requirements, and minimize gas waste.

In accordance with the invention there is provided control apparatus for use in a gas delivery system including one or more gas consuming stations each connected through gas lines to a source of high pressure gas, said control apparatus comprising:

a pressure regulator for connection in the gas line to the gas consuming station for substantially reducing the pressure of the gas at the output of the regulator, and

a surge tank means having an inlet in fluid communication with the outlet of the pressure regulator, and an outlet for fluid communication with a station,

whereby the flow of gas delivered from said control to said station at said reduced pressure is greater during the transient period immediately upon operating the station, than during steady state operating conditions.

In the case of a remote installation, there is a pressure regulator and surge tank in each drop line. A flow restriction is located between the outlet of the regulator and inlet of the surge tank.

The purpose of the surge tank is to provide a low pressure gas reservoir between the regulator and welding apparatus. The surge tank functions to provide a flow of gas during the transient period which is greater than that supplied to the welding apparatus during steady state operation. Thus, the tank acts to supply a "surge" of gas when the welding operation begins. The purpose of the flow restriction is to increase or enhance the pressure drop across the surge tank during the transient period, and thus increase the flow or surge of gas during transient over the surge if the restriction were not present.

The objective is to efficiently, without waste, meet the gas requirements under both transient and steady state conditions. Thus, with the low pressure set to supply the proper flow of gas under steady state conditions, the flow restriction and the volume of the surge tank should be such that the amount of gas contained therein under low pressure static conditions will be sufficient to supply the proper flow of gas during the transient period.

The result is a significant reduction of waste and a correspondingly significant saving in money.

In a preferred embodiment of the invention, the components of the apparatus, such as the pressure gauge, pressure regulator, flow restriction and surge tank, are positioned within a sealed housing to prevent tampering. This will ensure that the apparatus, once adjusted to function in the most efficient manner, will remain that way, and will not be subject to tampering by the welding operators. Thus, it is another primary object of the invention to provide an apparatus that is economical in manufacture and durable in use, which is easy to adjust for optimum efficiency of each welding station, and yet is readily sealed to prevent tampering with the components thereof once the adjustment has been made.

In accordance with this preferred embodiment, the pressure gauge is visible from one side of the housing. A key operated lock selectively closes an opening in one side of the housing so that the pressure regulator can only be adjusted when the lock has been removed from the housing thereby exposing a pressure adjustment screw of the regulator.

Details of the invention will be described with reference to the accompanying drawings in which:-

Figure 1 is a schematic view of a typical welding shop layout;

Figure 2 is a perspective view of the apparatus of a preferred embodiment of this invention having a portion of the housing removed to more fully illustrate the invention;

Figure 3 is a front view of the apparatus of Figure 2;

Figure 4 is a sectional view of the apparatus as seen on lines 4-4 of Figure 3 with the broken lines illustrating the lock having been removed therefrom;

Figure 5 is a sectional view seen on lines 5-5 of Figure 4;

Figure 6 shows a gas flow curve from initial to steady state conditions approximating optimum flow requirements for efficient operation;

Figure 7 is a view of a fitting showing the flow restriction in accordance with this invention in dashed lines; and

Figure 8 is a side elevation view of the flow restriction of Figure 7.

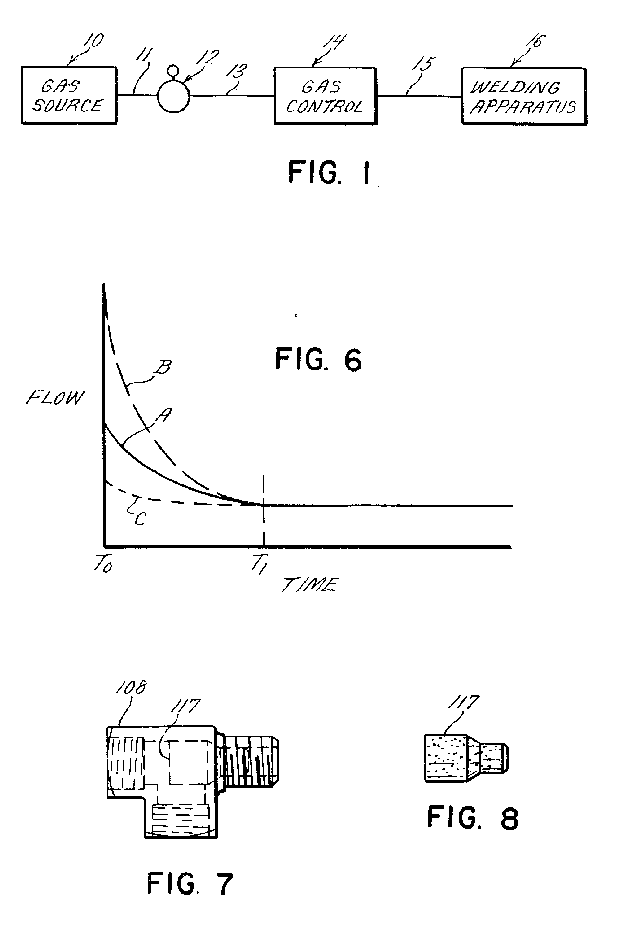

Referring to Figure 1, the numeral 10 designates the source of high pressure welding gas connected through a gas line 11 to a pressure regulator 12 typically included in conventional welding systems. The outlet of the pressure regulator 12 is connected through a line 13 to a gas control 14 which is the subject of the present invention. The outlet of the gas control 14 is connected through a line 15 to a welding apparatus 16 of a typical welding station. Examples of welding systems to which this invention relates are metal inert gas (M.I.G.) and tungsten inert gas (T.I.G.) welding systems, each of which contain a shutoff valve to prevent gas flow when no welding is in progress.

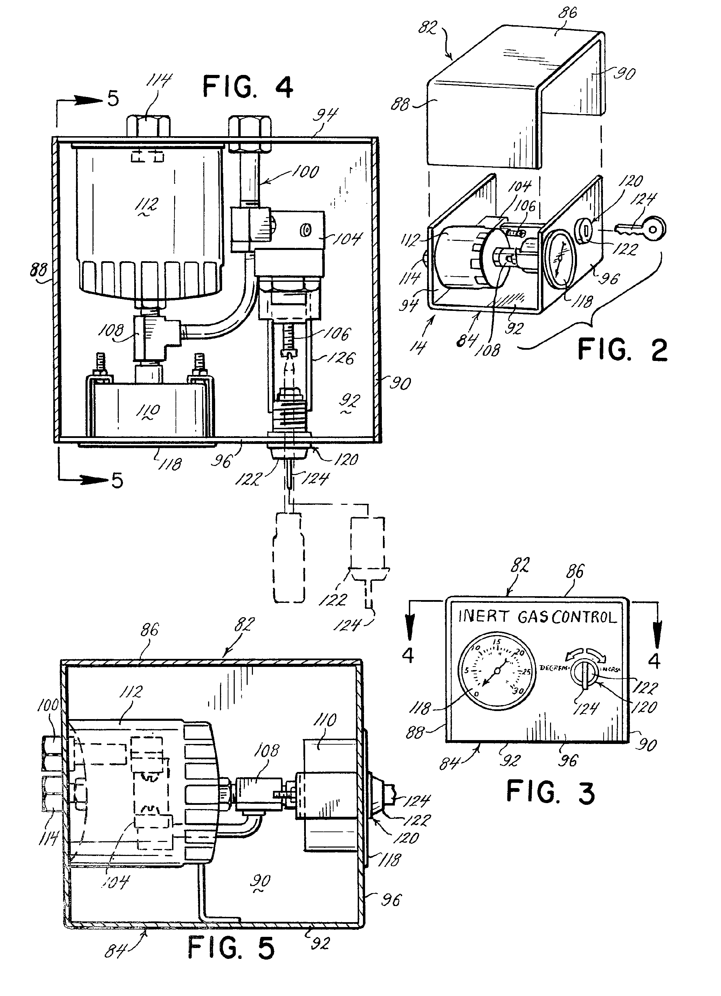

Referring to Figures 2 to 5, the control apparatus 14 of this preferred embodiment generally comprises a housing formed from housing members 82 and 84 which are welded together. Housing member 82 includes a top 86 and sides 88 and 90 which extend downwardly therefrom. Housing member 84 includes a bottom 92 having back and front walls 94 and 96 extending upwardly therefrom.

Fitting 100 (Figure 4) is positioned at the back portion of the apparatus and is placed in communication with the line 13. The fitting 100 is connected to the inlet of an adjustable pressure regulator 104 including an adjustment screw 106. The pressure regulator 104 delivers outlet pressure of between approximately 0 to 15 psi (0 to 1.05 $kg/cm^2$) with inlet pressure of less than 350 psi (0 to 24.5 $kg/cm^2$), and maintains said outlet pressure consistantly over a period of time consistant with welding requirements. The outlet of pressure regulator 104 is in communication with a T-fitting 108 which is in communication with a pressure gauge 110 and the inlet of surge tank 112. The gauge is preferably of the 0 to 30 psi (0 to 2.109 $kg/cm^2$) type. Fitting 114 is in communication with the discharge outlet side of the surge tank 112 and is placed in communication with line 15 extending to the welding apparatus or wire feeder 16.

Referring also to Figures 7 and 8, a flow restriction 117 is mounted within the fitting 108 at the fitting connection to the surge tank. The restriction is circular in cross section and shaped as shown in Figures 7 and 8 to fit snugly within the fitting connection. The restriction is a sintered mass, preferably of bronze, and thus is porous, allowing a restricted flow of gas therethrough. By way of example, the restriction 117 may be about 0.25 inches (2.75 cm) in diameter at its small end. The restriction allows sufficient flow of gas to meet steady state requirements at the low pressure, while providing a pressure drop across the surge tank greater than said drop without the restriction, for satisfying the transient requirements.

As best seen in Figure 3, the face 118 of the pressure gauge 110 is externally visible at the front of the housing. A key-operated lock 120 is mounted in the front of the housing and includes a barrel 122 which is removable therefrom when the key 124 is utilized. Support 126 extends from the lock 120 to the pressure regulator 104 as best illustrated in Figure 4. Thus, with the barrel 122 in place in the lock 120 and the key 124 removed therefrom, access to the pressure adjustment screw 106 is prevented. However, when the barrel 122 is removed from the lock 120, the pressure adjustment screw 106 may be rotated by simply inserting a screwdriver through an opening in the lock 120 as seen in Figure 4.

Thus, the described embodiment provides a self-contained, sealed, unit for the apparatus of this invention, which is relatively inexpensive, yet durable, and which prevents tampering with the unit components, while allowing ready adjustment by authorized personnel. The unit also provides ready connection in the gas line at each welding station.

While applicant need not explain, or even know, the theory of operation of his invention, it being sufficient that the apparatus and method of the invention solve the problem and achieve the results intended, the theory of operation is believed to be as follows:

The flow of gas required under the transient conditions (when the welding apparatus is first turned on, as when the gas nozzle trigger is depressed) is greater than the flow of gas needed during steady state conditions (continued welding after transient). It is believed that the reason for requiring this additional flow of gas during transient conditions is that when the welding apparatus is off, air leaks back through the nozzle and partly into the gas line. This air must be quickly purged and replaced with the inert gas to produce a high quality weld. Also, it is critical to displace the air at the weld zone of the work piece upon initiating the weld.

Curve A of Figure 6 illustrates optimum gas flow from the welding apparatus over time. The time period between zero and $T_1$ is the transient period. The time period after $T_1$ is the steady state period. As shown by curve A, the flow of gas required for proper welding during transient conditions is higher than during steady state conditions.

As a comparison to curve A, curve B illustrates the gas flow from a welding apparatus of a conventional welding system without the control of the present invention, and curve C illustrates the gas flow from a welding apparatus of a welding system which would include only a regulator with no surge tank. These curves illustrate that with the conventional system there is considerable gas waste during the transient period as shown by curve B, while by using only a regulator without a surge tank, the gas flow during transient is insufficient as shown by curve C.

As previously explained, the primary object of this invention is to provide sufficient gas flow from initial conditions ($T_0$) through steady state, without wasting gas. In other words, the primary object of the invention is to approximate curve A as closely as possible. This invention fulfills this object.

Because any temperature change in the gas during transient flow is negligible and can be ignored for the purpose of this analysis, therefore ignoring temperature, Boyle's Law states:

$$V_1 P_1 = V_2 P_2; \text{ or } V_2 = \frac{P_1 V_1}{P_2},$$

where $P_1$ and $P_2$ are absolute pressures, where $V_1$ is the volume of the gas in the surge tank at static pressure; $P_1$ is the static pressure in the surge tank at $T_0$; $P_2$ is the pressure in the surge tank at $T_1$; and $V_2$ is the effective volume of the gas in the surge tank brought about by the change in pressure from $P_1$ to $P_2$. In other words, as the pressure drops from $P_1$ to $P_2$, the effective volume of the gas in the surge tank increases. Or, to put in another way, the actual quantity (weight) of gas in the surge tank decreases during the transient period. This change in quantity, which can be represented as $V_2 - V_1$ or $\Delta V$, becomes the surge or additional flow of gas required for proper welding during transient conditions as indicated in Figure 6, curve A from $T_0$ to $T_1$.

It can also be seen that the greater the factor $\dfrac{P_1}{P_2}$, the greater is $\Delta V$. The flow restriction increased this factor, and thus increased the surge during transient at the low static pressure.

Once steady state conditions are reached, there is no appreciable pressure drop across the surge tank so that $P_1$ is equal to $P_2$ and $V_1$ is equal to $V_2$. In other words, the surge or increased flow of gas is supplied only during transient so that there is no excessive gas loss during steady state welding. The volume of the surge tank, and the pressure of the gas within it under static conditions, and the flow restriction, are selected to provide a flow of gas that will closely approximate the transient and steady state condition requirements. Thus, the surge tank should be of a sufficiently large volume to supply adequate gas without excessive waste during transient conditions, and at a sufficiently low static pressure to minimize gas waste during steady state conditions.

0036736

- 10 -

There are various changes and modifications which may be made to applicants' invention as would be apparent to those skilled in the art. However, any of these changes or modifications are included in the teaching of applicants' disclosure and it is intended that the invention be limited only by the scope of the claims appended hereto.

Claims:

1.         Control apparatus for use in a gas delivery
system including one or more gas consuming stations
each connected through gas lines to a source of high
pressure gas, said control apparatus comprising:
          a pressure regulator (104) for connection
in the gas line to the gas consuming station for substantially reducing the pressure of the gas at the
output of the regulator, and
          a surge tank means (112) having an inlet
in fluid communication with the outlet of the pressure
regulator, and an outlet (114) for fluid communication
with a station,
          whereby the flow of gas delivered from
said control to said station at said reduced pressure
is greater during the transient period immediately
upon operating the station, than during steady state
operating conditions.

2.         Control apparatus as claimed in claim 1,
further comprising:
          a housing (82,84), said pressure regulator
(104) being mounted within said housing;
          and means (120) providing selective access
to said regulator (104) for adjustment thereof to
prevent unauthorized tampering with said regulator (104).

3.         Control apparatus as claimed in claim 2,
wherein said surge tank means (112) is located within
said housing.

4.         Control apparatus as claimed in claim 2
or claim 3 wherein said selective access means (120)
is a key operated closure.

5.          Control apparatus as claimed in any of claims 2 to 4, wherein said selective access means (120) further comprises a closure (122) operable between a locked/closed position and an open position to provide an opening in the housing (82,84) with the closure (122) in the open position, said opening allowing insertion therethrough of an adjusting tool for adjusting said regulator (104).

6.          Control apparatus as claimed in any preceding claim, further comprising a pressure gauge (110) in fluid communication with said regulator output.

7.          Control apparatus as claimed in claim 6, wherein said gauge (110) is mounted within said housing (82,84) for reading exteriorly of said housing with said housing closed.

8.          Control apparatus as claimed in claim 7, wherein said gauge (110) is mounted in a wall of said housing (82,84) with its face (118) exteriorly exposed for ready reading.

9.          Control apparatus as claimed in any preceding claim, further comprising a flow restriction (117) between said pressure regulator (104) and said surge tank means (112).

FIG. 1

FIG. 6

FIG. 7

FIG. 8

0036736

FIG. 4

FIG. 2

INERT GAS CONTROL
DECREM    INCRSA

FIG. 3

FIG. 5